Europäisches Patentamt

European Patent Office

Office européen des brevets

(11) Veröffentlichungsnummer: **0 261 456 B1**

# EUROPÄISCHE PATENTSCHRIFT

(45) Veröffentlichungstag der Patentschrift: **04.03.92**

(51) Int. Cl.⁵: **H01F 1/11, C01G 49/02**

(21) Anmeldenummer: **87112714.8**

(22) Anmeldetag: **01.09.87**

(54) **Magnetische Eisenoxidpigmente und Verfahren zu ihrer Herstellung.**

(30) Priorität: **13.09.86 DE 3631193**

(43) Veröffentlichungstag der Anmeldung:
**30.03.88 Patentblatt 88/13**

(45) Bekanntmachung des Hinweises auf die
Patenterteilung:
**04.03.92 Patentblatt 92/10**

(84) Benannte Vertragsstaaten:
**BE DE FR GB IT NL**

(56) Entgegenhaltungen:
DD-A- 209 353          DE-A- 2 036 612
DE-A- 2 235 383        DE-A- 2 243 231
DE-A- 2 410 517        DE-A- 2 526 363
DE-A- 2 639 250        DE-A- 2 650 890
DE-A- 2 811 473        DE-A- 2 829 344
DE-A- 2 903 593        DE-A- 3 038 989
DE-A- 3 228 021        DE-A- 3 344 299
DE-A- 3 520 210        GB-A- 2 131 783
US-A- 4 371 567

(73) Patentinhaber: **BAYER AG**

**W-5090 Leverkusen 1 Bayerwerk(DE)**

(72) Erfinder: **Rodi, Fritz, Dr.**
**Schwarzer Weg 41**
**W-4130 Moers 1(DE)**
Erfinder: **Kiemle, Peter, Dr.**
**Bärenstrasse 53a**
**W-4150 Krefeld-Traar(DE)**
Erfinder: **Eiling, Aloys, Dr.**
**Schmiedestrasse 12**
**W-4630 Bochum 6(DE)**
Erfinder: **Kathrein, Hendrik, Dr.**
**Gürtelweg 4**
**W-4053 Jüchen-Aldenhoven(DE)**

**Beschreibung**

Die vorliegende Erfindung betrifft magnetische Eisenoxidpigmente mit einer monomolekularen Beschichtung aus Cobaltverbindungen sowie Verfahren zur Herstellung dieser magnetischen Eisenoxidpigmente.

$\gamma$-$Fe_2O_3$-Magnetpigmente besitzen Koerzitivkräfte bis zu etwa 31 kA/m, Ferrit-Magnetpigmente bis zu etwa 35 kA/m. Bei Erhöhung der Speicherdichte werden zur magnetischen Signalaufzeichnung im Audio-, Video- und Datenspeicherungsbereich zunehmend Magnetpigmente mit wesentlich höherer Koerzitivfeldstärke verwendet. Zur Erhöhung der Koerzitivfeldstärke magnetischer Eisenoxide sind verschiedene Verfahren bekannt:

Gemäß der DE-A 2 903 593 erhält man höher koerzitive Pigmente aus $\alpha$-FeOOH-Vorläuferverbindungen, die mit Cobalt dotiert sind. Dabei erreicht man durch 1 % Cobalt und einen FeO-Gehalt von 20 % eine Koerzitivfeldstärke von etwa 620 Oe. Als nachteilig haben sich bei diesen Pigmenten die niedrige Kopierdämpfung, die ungenügende magnetische Stabilität und die hohe Temperaturabhängigkeit der Koerzitivkraft erwiesen.

Ein anderer Weg, zu hohen Koerzitivfeldstärken zu gelangen, ist in der DE-A 2 235 383 beschrieben. Dabei läßt man auf einen Kern aus magnetischem Eisenoxid in stark alkalischem Milieu eine Schicht von Cobaltferrit epitaktisch aufkristallisieren. Diese Pigmente zeigen gegenüber den cobaltdotierten Pigmenten bessere Werte der Kopierdämpfung und magnetischen Stabilität, lassen jedoch hinsichtlich der Schaltfeldverteilung, der Temperaturabhängigkeit der Koerzitivkraft, der Querfeldstabilität und der in Bändern erreichbaren Langzeit-Löschdämpfungseigenschaften zu wünschen übrig.

Verfahren zur Herstellung von magnetischen Eisenoxidpigmenten mit besseren magnetostatischen Eigenschaften sind in den DT-A 2 036 612, DE-A 2 243 231, DE-A 2 410 517, DE-A 2 289 344 beschrieben. Hierbei wird jeweils auf die Oberfläche des Eisenoxid-Kernmaterials eine Cobaltverbindung, in der Regel Cobalthydroxid aufgefällt. Durch geeignete Maßnahmen wird dann Cobalt in die oberflächennahen Zonen des Kernmaterials eindiffundiert.

In den DE-A 3 520 210 und DE-A 3 344 299 sind Verfahren beschrieben, bei denen zur Verbesserung der magnetostatischen Eigenschaften Cobalt- und Eisen-(II)-Verbindungen in mehreren Schichten getrennt auf das Eisenoxidpigment-Kernmaterial aufgefällt werden.

Obwohl durch Anwendung der erwähnten Verfahren einige Pigmenteigenschaften verbessert werden konnten, weisen alle Pigmente den Nachteil einer relativ hohen Querfeldinstabilität und hohen Temperaturabhängigkeit der Koerzitivkraft auf. In den Patentschriften DE-C 2 650 890 bzw. DE-C 2 639 250 sind zwar Eisenoxid-Magnetpigmente mit relativ niedrigen Werten der Temperaturabhängigkeit der Koerzitivkraft angeführt, jedoch sind die aufgeführten Pigmente zu niederkoerzitiv, um für die Herstellung von Video- oder von Audiobändern (Arbeitspunkt II) geeignet zu sein. Es bestand daher weiterhin die Aufgabe ein magnetisches Eisenoxidpigment zur Verfügung zu stellen, daß eine für die Herstellung von Audio- und Videobändern ausreichend hohe Koerzitivkraft hat und zusätzlich eine gute Magnetostatik mit hoher Temperatur- und Querfeldstabilität der Koerzitivkraft sowie gute Löschdämpfeigenschaften aufweist.

Überraschenderweise wurde nun gefunden, daß diese Anforderungen erfüllt werden durch magnetische Eisenoxidpigmente mit einer monomolekularen Beschichtung von Cobaltverbindungen, bei deren Herstellung das als Kernmaterial dienende magnetischen Eisenoxidpigment zunächst mit einer Schicht aus Magnetit oder einem bertholloiden Eisenoxid der Zusammensetzung $FeO_x$ mit $1,33 < x < 1,5$ beschichtet wird, auf die anschließend eine Cobaltverbindung aufgetragen wird.

Diese magnetischen Eisenoxidpigmente sind Gegenstand dieser Erfindung. Es sind magnetische Eisenoxidpigmente mit einer monomolekularen Beschichtung aus Cobaltverbindungen, wobei die Eisenoxidpigmente eine Temperaturabhängigkeit der Koerzitivkraft im Temperaturintervall von 76 K bis 298 K von kleiner als 0,13 kA/mK aufweisen. Der Cobaltgehalt liegt je nach Feinteiligkeit der Produkte vorzugsweise zwischen 2 und 4 %.

Gegenstand dieser Erfindung ist auch ein Verfahren zur Herstellung der erfindungsgemäßen magnetischen Eisenoxidpigmente. Es ist dadurch gekennzeichnet, daß ein magnetisches Eisenoxid-Kernmaterial der Zusammensetzung $FeO_x$ mit $1,33 < x < 1,5$ in einem ersten Schritt mit $Fe_3O_4$ oder einer bertholloiden Eisenoxidverbindung der Zusammensetzung $FeO_x$ ($1,33 < x < 1,5$) vorbelegt und in einem zweiten Schritt mit einer Cobaltverbindung beschichtet wird.

Als magnetische Eisenoxid-Kernmaterial können $\gamma$-$Fe_2O_3$-, $Fe_3O_4$-Pigmente sowie bertholloide Verbindungen der Zusammensetzung $FeO_x$ ($1,33 < x < 1,5$) eingesetzt werden. Diese Eisenoxide können dabei eines oder mehrere Begleitelemente aus der Gruppe P, Zn, B, Si, Sn, Ge, Al, Mn, Cr, Ni enthalten.

Erfindungsgemäß wird die Vorbelegung mittels eines Eisen(II,III)-Salzes mit einem Fe(III)-Gehalt von 0 bis 67 % durchgeführt. Besonders bevorzugt wird die Vorbelegung in alkalischem Milieu durchgeführt.

Die Beschichtung kann nach folgenden Verfahren durchgeführt werden: Das Eisenoxidkernmaterial wird in Wasser dispergiert, mit dem Eisensalz oder dessen Lösung und einer Alkalilösung versetzt. Die Zugabe der Alkalilösung kann vor oder nach der Dispergierung bzw. vor oder nach der Zugabe der Eisensalzlösung erfolgen.

Bevorzugt wird die Vorbelegung unter oxidierenden Bedingungen, besonders bevorzugt durch Verwendung von Luft als Oxidationsmittel, durchgeführt. Durch diese Art der Oxidation oder die Zugabe anderer Oxidationsmittel werden 66 bis 100 % der Fe(II)-Ionen oxidiert. Vorzugsweise wird bei der Vorbelegung so lange oxidiert, bis kein Fe(II)-Anteil mehr in der Lösung ist. Die Oxidation der Suspension kann bei Temperaturen zwischen 20°C und dem Siedepunkt erfolgen.

Im Anschluß an die Auftragung der Eisenverbindung erfolgt die Auftragung der Cobaltverbindung durch Zugabe eines Cobaltsalzes zu der Pigmentsuspension. Die Beschichtung mit Cobalt kann unter oxidierenden oder inerten Bedingungen durchgeführt werden.

Als Cobaltverbindung ist ein Co(II)-Salz, insbesondere $CoSO_4 \cdot 7H_2O$ geeignet. Besonders gute Ergebnisse werden erzielt, wenn die Beschichtung so durchgeführt wird, daß der Co-Gehalt zwischen 0,5 und 10 %, bezogen auf das eingesetzte Kernmaterial, beträgt.

Auch die Co-Beschichtung wird vorzugsweise im alkalischen Milieu durchgeführt. Die OH-Konzentration während der Beschichtung mit der Eisen- sowie der Cobaltverbindung beträgt 0,1 bis 10 Mol/l, vorzugsweise 0,3 bis 5 Mol/l.

Der Feststoffgehalt an Kernmaterial in der Suspension liegt zwischen 30 g/l und 200 g/l, vorzugsweise zwischen 50 und 150 g/l. Die aufgetragene Eisenoxidmenge entspricht 2 bis 25 % des eingesetzten Kernmaterials.

Die Aufarbeitung der Pigmentsuspension erfolgt durch Filtration, Waschung und Trocknung.

Im Folgenden wird die Erfindung beispielhaft erläutert, ohne daß hierin eine Einschränkung der Erfindung zu sehen ist.

Zur Ermittlung der Eigenschaften der erfindungsgemäßen magnetischen Eisenoxidpigmente im Band werden jeweils etwa 200 g des magnetischen Eisenoxids in einem Lack auf Polyurethanbasis eingebracht, so daß der Volumenanteil des Magnetpigmentes ca. 45 % beträgt. Die Dispersion wird 3 Stunden in einer Perlmühle gemahlen und danach auf eine Folie aus Polyester in dünner Schicht mit Hilfe einer Beschichtungsmaschine aufgetragen, in einem homogenen Magnetfeld von 80 kA/m ausgerichtet und bei 100°C ausgehärtet. Nach Schneiden des Bandes werden die folgenden Parameter ermittelt:

$I^H c$       Koerzitivkraft gemessen bei 398 kA/m

Br/Bs       remanente Magnetisierung/Sättigungsmagnetisierung

OR       remanente Magnetisierung quer zur Bandrichtung/remanente Magnetisierung längs zur Bandrichtung

SFD       Schaltfeldverteilung

Kd(dB)       Kopierdämpfung

Zur Ermittlung der Querfeldstabilität wird der $I^H c$-Abfall eines Bandes gemessen, das 72 h bei 60°C in einem magnetischen Feld von 200 kA/m gelagert wurde, wobei der Feldvektor senkrecht zur mittleren Orientierung der Nadellängsachse ausgerichtet war. Mit den beschriebenen Pigmenten lassen sich Bänder mit verbesserten Aufzeichnungseigenschaften, höherer Kopierdämpfung und verbesserten Langzeitlöschdämpfungseigenschaften herstellen.

Die Messung der Langzeit-Löschdämpfung erfolgt in Anlehnung an die von der Victor-Company (JVC) herausgegebene Spezifikation (Punkt 7-7): Auf die Audiospur einer VHS-Cassette wird ein 1-kHz-Signal mit einem Pegel von +10 dB über dem Aufnahmereferenzstrom-Pegel aufgezeichnet. Unter Verwendung eines selektiven Pegelmessers mit einer Filterbandbreite von 40 Hz wird die Löschdämpfung gemessen

a) direkt nach der Aufnahme,

b) nach einer Lagerzeit von 100 h bei 20°C.

Alle in den folgenden Beispielen enthaltenen Mengenangaben sind in Gew.-%, sofern nicht anders angegeben.

Beispiel 1

In einem rührbaren Behälter mit 20 m³ Volumen werden 9 m³ einer wäßrigen Suspension von 1500 kg Bayferrox® AC 5111 M, Handelsprodukt der Bayer AG, vorgelegt. Das Magnetpigment hat eine Koerzitivkraft von 33,8 kA/m, einen FeO-Gehalt von 24,2 Gew.-% und ein Länge- zu Breiteverhältnis von ca 8:1. In die Suspension werden unter Rühren 1222 kg einer 18,7 %igen $FeSO_4$-Lösung gegeben. Anschließend wird mit 1346 l 50 %iger NaOH unter Stickstoff-Beschleierung gefällt und die Suspension auf 80°C aufgeheizt. Anschließend wird 3 Stunden mit 7,5 m³/h Luft begast. Nach Zupumpen einer Lösung von 200 kg $CoSO_4$ x

7 $H_2O$ in 1353 $m^3$ Wasser wird weitere 2 Stunden mit Luft begast. Die Aufarbeitung erfolgt durch Filtrieren, Waschen und Trocknen.

Vergleichsbeispiel 1

In einem rührbaren Behälter mit 20 $m^3$ Volumen werden 10 $m^3$ einer wäßrigen Suspension von 1648 kg Bayferrox® AC 5111 M, Handelsprodukt der Bayer AG, vorgelegt. Das Magnetpigment ist identisch mit demjenigen aus Beispiel 1 und hat eine Koerzitivkraft von 33,8 kA/m, einen FeO-Gehalt von 24,2 Gew.-% und ein Länge- zu Breiteverhältnis von 8:1. In die Suspension werden unter Rühren 1269 kg einer 21,2 %igen $FeSO_4$-Lösung und eine Lösung von 235,9 kg $CoSO_4$ x 7 $H_2O$ in 1318 $m^3$ Wasser gegeben. Anschließend wird mit 1584 l 50 %iger NaOH unter Stickstoff-Beschleierung gefällt und die Suspension auf 80 $^\circ$C aufgeheizt. Nach 3 Stunden Begasung mit 7,5 $m^3$/h Luft wird die Suspension durch Filtration, Waschen und Trocknen aufgearbeitet.

Die magnetischen Daten der magnetischen Eisenoxidpigmente sind in der Tabelle 1 gegenübergestellt.

## Tabelle 1

| | Beispiel 1 | Vergleichs-beispiel 1 |
|---|---|---|
| **Pulver:** | | |
| $I^HC$ (kA/m) | 48,5 | 48,5 |
| Mr/ʃ (mWb.m/kg) | 51,5 | 52,9 |
| Ms/ʃ (mWb.m/kg) | 104,9 | 101,4 |
| **Band** | | |
| $I^HC$ (kA/m) | 52,4 | 51,7 |
| Br/Bs | 0,90 | 0,86 |
| OR | 2,30 | 2,20 |
| SFD | 0,47 | 0,54 |
| KD (dB) | 55,0 | 51,5 |
| LD (dB) | > 70,0 | 65 |
| $LD_{100}$ (DB) | 66,0 | 59,5 |
| $I^HC$-Abfall im magnetischen Querfeld | 1,6 % | 4 % |

Bei nahezu gleicher Koerzitivkraft sind im Beispiel 1 Br/Bs, OR, Schaltfeldverteilung, Kopierdämpfung, Löschdämpfung und Querfeldstabilität deutlich besser als in dem angeführten Vergleichsbeispiel.

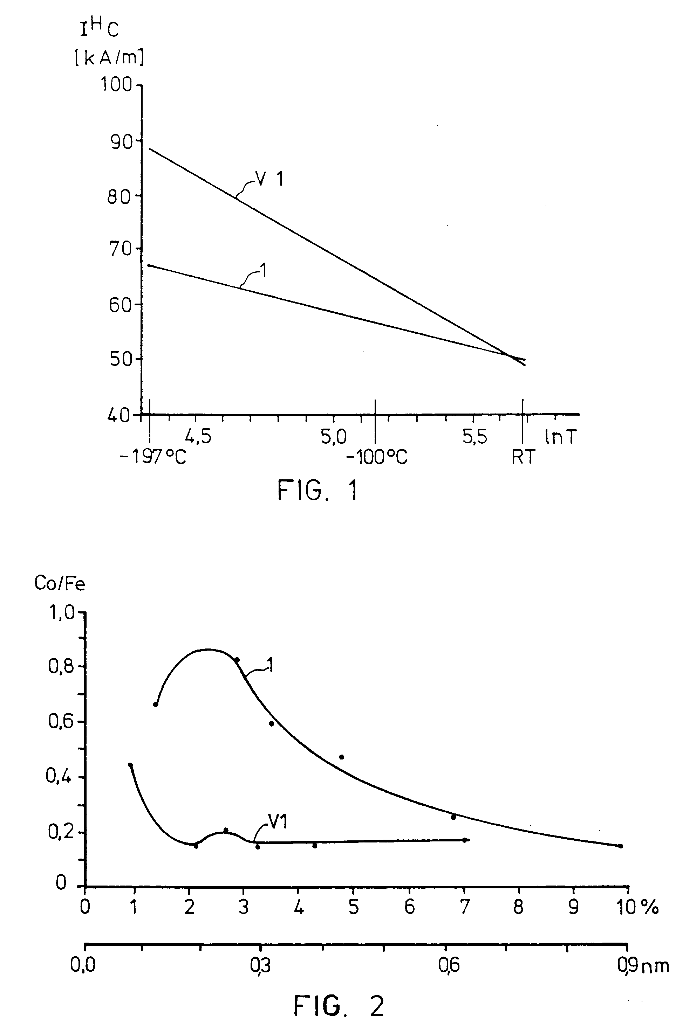

Fig. 1 zeigt die Temperaturabhängigkeit der Koerzitivkraft gemessen am Band.

HCl-Beizung von Cobalt beschichteten Magnetpigmenten aus Beispiel 1 und Vergleichsbeispiel 1

Durchführung

20 g des zu charakterisierenden Pigmentes werden in 500 ml $H_2O$ dispergiert.

Die Suspension wird nach Überführung in das Reaktionsgefäß unter Rühren auf $40°$ C aufgeheizt. Zum Zeitpunkt $t = 0$ werden 300 ml HCl (HCl-Konz. = 1 Mol/l; Temperatur der Lösung: $40°$ C) zugegeben.

Nach jeweils 2, 5, 10, 20, 40, 80 Minuten werden jeweils 70 ml der Suspension entnommen und filtriert. Im Filtrat wird die Cobalt- und Eisenkonzentration analytisch bestimmt.

Berechnung der Cobaltverteilung

Aufgetragen wird das Co/Fe-Verhältnis (Berechnung siehe Tabelle 2) gegen den Abbeizgrad, der sich wie folgt ergibt:

$$\text{Abbeizgrad (\%)} = \frac{(Co + Fe) \text{ in Lösung}}{(Co + Fe)_{Pigment}} \cdot 100$$

Mit 0,8 l Lösungsvolumen, einer eingesetzten Pigmentmenge von 20 g und einem $(Fe_3O_4 + CoFe_2O_4)$-Gehalt von ca. 95 % ergibt sich:

$$\text{Abbeizgrad (\%)} = \frac{([Co] + [Fe]) \cdot 0,8}{20 \cdot 0,95/\text{Molgew. } (FeO_{4/3})} \cdot 100$$

wobei:

| | |
|---|---|
| [Co] = | Cobaltkonz. (mol/l) |
| [Fe] = | Eisenkonz. (mol/l) |
| Molgew. $(FeO_{4/3})$ = | Molekulargewicht von $Fe_3O_4$ bezogen auf Fe. Näherungsweise wird das Atomgewicht von Co und Fe gleichgesetzt. |
| Abbeizgrad (%) = | 325 ([Co] + [Fe]) |

Die in Fig. 2 graphisch aufgetragenen Werte beweisen die monomolekulare Co-Beschichtung der erfindungsgemäßen magnetischen Eisenoxidpigmente. In Fig. 2 ist auf der Ordinate das Co/Fe-Molverhältnis aufgetragen. Auf der oberen Abszisse der Abbeizgrad (%), auf der unteren die abgebeizte Schichtdicke ($\mu$m).

**Tabelle 2**

| t (min) | Cobaltkonz. mol/l | Eisenkonz. mol/l | Co/Fe-Verhältnis | Abbeizgrad x |
|---|---|---|---|---|
| 0 | 0 | 0 | | |
| 2 | $[Co]^1$ | $[Fe]^1$ | $\dfrac{[Co]^1}{[Fe]^1}$ | $\dfrac{[Co]^1 + [Fe]^1}{2} \cdot 325$ |
| 3 | $[Co]^2$ | $[Fe]^2$ | $\dfrac{[Co]^2 - [Co]^1}{[Fe]^2 - [Fe]^1}$ | $\dfrac{[Co]^1 + [Co]^2 + [Fe]^1 + [Fe]^2}{2} \cdot 325$ |
| 10 | $[Co]^3$ | $[Fe]^3$ | $\dfrac{[Co]^3 - [Co]^2}{[Fe]^3 - [Fe]^2}$ | $\dfrac{[Co]^2 + [Co]^3 + [Fe]^2 + [Fe]^3}{2} \cdot 325$ |
| 20 | $[Co]^4$ | $[Fe]^4$ | $\dfrac{[Co]^4 - [Co]^3}{[Fe]^4 - [Fe]^3}$ | $\dfrac{[Co]^3 + [Co]^4 + [Fe]^3 + [Fe]^4}{2} \cdot 325$ |
| 40 | $[Co]^5$ | $[Fe]^5$ | $\dfrac{[Co]^5 - [Co]^4}{[Fe]^5 - [Fe]^4}$ | $\dfrac{[Co]^4 + [Co]^5 + [Fe]^4 + [Fe]^5}{2} \cdot 325$ |
| 80 | | | $\dfrac{[Co]^6 - [Co]^5}{[Fe]^6 - [Fe]^5}$ | $\dfrac{[Co]^5 + [Co]^6 + [Fe]^5 + [Fe]^6}{2} \cdot 325$ |

## Patentansprüche

1. Magnetische Eisenoxidpigmente mit einer monomolekularen Beschichtung aus Cobaltverbindungen wobei die Eisenoxidpigmente eine Temperaturabhängigkeit der Koerzitivkraft im Temperaturintervall von 76 K bis 298 K von kleiner als 0,13 kA/mK aufweisen und die Koerzitivkraft am auf 0,9 g/cm³

EP 0 261 456 B1

verdichteten Pulver zwischen 40 und 51 kA/m aufweisen.

2. Verfahren zur Herstellung der magnetischen Eisenoxidpigmente gemäß Anspruch 1, dadurch gekennzeichnet, daß ein magnetisches Eisenoxid-Kernmaterial der Zusammensetzung $FeO_x$ mit $1,33 < x < 1,55$ in einem ersten Schritt mit $Fe_3O_4$ oder einer bertholloiden Eisenoxidverbindung vorbelegt und in einem zweiten Schritt mit einer Cobaltverbindung beschichtet wird.

3. Verfahren gemäß Anspruch 2, dadurch gekennzeichnet, daß die Vorbelegung unter oxidierenden Bedingungen durchgeführt wird.

4. Verfahren gemäß Anspruch 3, dadurch gekennzeichnet, daß die oxidierenden Bedingungen durch Verwendung von Luft erzeugt werden.

5. Verfahren gemäß einem oder mehrerer der Ansprüche 2 bis 4, dadurch gekennzeichnet, daß die Vorbelegung im alkalischen Milieu erfolgt.

6. Verfahren gemäß einem oder mehrerer der Ansprüche 2 bis 5, dadurch gekennzeichnet, daß bei der Vorbelegung so lange oxidiert wird, bis kein Fe(II)-Anteil in der Lösung enthalten ist.

7. Verfahren gemäß einem oder mehrerer der Ansprüche 2 bis 6, dadurch gekennzeichnet, daß die Cobaltverbindung ein Co(II)-Salz - bevorzugt $CoSO_4 \cdot 7 H_2O$ ist.

8. Verfahren gemäß einem oder mehrerer der Ansprüche 2 bis 7, dadurch gekennzeichnet, daß die Beschichtung so durchgeführt wird, daß der Co-Gehalt zwischen 0,5 und 10 %, bezogen auf das eingesetzte Kernmaterial, beträgt.

9. Verfahren gemäß einem oder mehrerer der Ansprüche 2 bis 8, dadurch gekennzeichnet, daß die Beschichtung im alkalischen Milieu durchgeführt wird.

**Claims**

1. Magnetic iron oxide pigments having a monomolecular coating of cobalt compounds, the iron oxide pigments showing a dependence on temperature of their coercive force in the temperature range from 76 K to 298 K of less than 0.13 kA/mK and the coercive force of the powder compressed to 0.9 g/cm$^3$ being from 40 to 51 kA/m.

2. A process for the production of magnetic iron oxide pigments claimed in claim 1, characterized in that a magnetic iron oxide core material having the composition $FeO_x$ with $1.33 < x < 1.55$ is precoated with $Fe_3O_4$ or a non-stoichiometric iron oxide compound in a first step and is coated with a cobalt compound in a second step.

3. A process as claimed in claim 2, characterized in that the precoating step is carried out under oxidizing conditions.

4. A process as claimed in claim 3, characterized in that the oxidizing conditions are established by using air.

5. A process as claimed in one or more of claims 2 to 4, characterized in that the precoating step is carried out in alkaline medium.

6. A process as claimed in one or more of claims 2 to 5, characterized in that, in the precoating step, oxidation is carried out until there is no Fe(II) left in the solution.

7. A process as claimed in one or more of claims 2 to 6, characterized in that the cobalt compound is a Co(II) salt, preferably $CoSO_4 \cdot 7H_2O$.

8. A process as claimed in one or more of claims 2 to 7, characterized in that the coating step is carried out in such a way that the Co content is between 0.5 and 10%, based on the core material used.

7

**9.** A process as claimed in one or more of claims 2 to 8, characterized in that the coating step is carried out in alkaline medium.

**Revendications**

**1.** Pigments d'oxyde de fer magnétiques avec un enrobage monomoléculaire en composés de cobalt, les pigments d'oxyde de fer présentant une dépendance de la force coercitive par rapport à la température inférieure à 0,13 kA/mK dans l'intervalle de température de 76 K à 298 K, et une force coercitive de 40 à 51 kA/m pour la poudre comprimée à 0,9 g/cm$^3$.

**2.** Procédé pour la fabrication des pigments d'oxyde de fer magnétiques selon la revendication 1, caractérisé en ce qu'un matériau central d'oxyde de fer de composition FeO$_x$ avec $1,33 < x < 1,5$ est préalablement garni, dans une première étape, de Fe$_3$O$_4$ ou d'un composé d'oxyde de fer berthollide, et enrobé, dans une seconde étape, d'un composé de cobalt.

**3.** Procédé selon la revendication 2, caractérisé en ce que le garnissage préalable est exécuté dans des conditions oxydantes.

**4.** Procédé selon la revendication 3, caractérisé en ce que on produit les conditions oxydantes en utilisant de l'air.

**5.** Procédé selon l'une ou plusieurs des revendications 2 à 4, caractérisé en ce que le garnissage préalable a lieu en milieu alcalin.

**6.** Procédé selon l'une ou plusieurs des revendications 2 à 5, caractérisé en ce que lors du garnissage, on oxyde jusqu'à ce qu'il n'y ait plus d'ingrédient de Fe(II) dans la solution.

**7.** Procédé selon l'une ou plusieurs des revendications 1 à 6, caractérisé en ce que le composé de cobalt est un sel de Co(II) - de préférence CoSO$_4$ . 7 H$_2$O.

**8.** Procédé selon l'une ou plusieurs des revendications 2 à 7, caractérisé en ce que l'enrobage est effectué de manière à ce que la teneur en cobalt soit de 0,5 à 10% par rapport au matériau central utilisé.

**9.** Procédé selon l'une ou plusieurs des revendications 2 à 8, caractérisé en ce que l'enrobage est effectué en milieu alcalin.

FIG. 1

FIG. 2